# EUROPÄISCHE PATENTANMELDUNG

(11) **EP 4 661 121 A1**
(43) Veröffentlichungstag der Anmeldung: **10.12.2025**
(21) Anmeldenummer: 24179994.9
(22) Anmeldetag: 04.06.2024
(51) Int. Cl.: H01M 8/2404

(54) **VERFAHREN UND VORRICHTUNG ZUR HANDHABUNG VON STACKBAUTEILEN**

(71) Anmelder: Carl Freudenberg KG, 69469 Weinheim (DE)
(72) Erfinder: Jakob, Thomas, 86316 Friedberg (DE); Liepert, Jürgen, 86447 Eisingersdorf (DE); Eberl, Martin, 86199 Augsburg (DE); Paukner, Matthias, 91757 Treuchtlingen (DE); Karmann, Christian, 86554 Pöttmes (DE)

(57) **Zusammenfassung**

Die Erfindung betrifft ein Verfahren zur Handhabung eines flächigen Stackbauteils (2) eines Brennstoffzellenstacks vor einer Montage in den Bennstoffzellenstack, umfassend die Schritte: Auflegen des flächigen Stackbauteils (2) auf eine Auflage, wobei das Stackbauteil (2) eine Vielzahl von Öffnungen (20) an einem Rand (21) des Stackbauteils (2) aufweist, Aktivieren einer Spreizvorrichtung (3), wobei ein Positionieren von mehreren Spreizelementen (30) der Spreizvorrichtung (3) derart erfolgt, dass in mehreren Öffnungen (20) des Stackbauteils (2) mindestens ein Spreizelement (30) angeordnet ist, und Bewegen der Spreizelemente (30) in den Öffnungen (20) des Stackbauteils (2) derart, dass das Stackbauteil (2) gespannt wird, so dass das Stackbauteil (2) in einer Ebene ausgerichtet ist.

## Beschreibung

Die vorliegende Erfindung betrifft ein Verfahren und eine Vorrichtung zur Handhabung von flächigen Stackbauteilen eines Brennstoffzellen-Stacks vor einer Montage des Stackbauteils in den Brennstoffzellenstack.

In jüngster Zeit spielen Brennstoffzellen, insbesondere im Bereich der Mobilität, zunehmend eine bedeutendere Rolle. Ein Problemkreis bei Brennstoffzellen ist dabei jedoch die sehr teure Herstellung von Brennstoffzellen-Stacks, insbesondere mit Leistungen bis zu 60 MW, welche insbesondere im Großserienmaßstab herstellbar sein müssen, um die Kosten für die Brennstoffzellen zu senken. Hierbei stellt insbesondere eine möglichst ebene Ausrichtung der flächigen Stackbauteile wie z.B. der Bipolarplatten, der Membranelektrodeneinheiten und der flächigen Dichtungsplatten ein Problem dar.

Es ist Aufgabe der Erfindung, ein Verfahren und eine Vorrichtung zur Handhabung von flächigen Stackbauteilen bereitzustellen, welche eine einfachere und kostengünstigere Herstellbarkeit bei erhöhter Qualität von Brennstoffzellenstacks ermöglicht.

Diese Aufgabe wird durch ein Verfahren mit den Merkmalen des Anspruchs 1 und eine Vorrichtung mit den Merkmalen des Anspruchs 7 gelöst. Die Unteransprüche zeigen bevorzugte Weiterbildungen der Erfindung.

Das erfindungsgemäße Verfahren zur Handhabung von flächigen Stackbauteilen eines Brennstoffzellenstacks vor einer Montage des Stackbauteils in den Brennstoffzellenstack weist dabei den Vorteil auf, dass eine Qualität des Brennstoffzellenstacks durch eine verbesserte Ebenheit der flächigen Stackbauteile signifikant verbessert werden kann. Insbesondere kann eine Lagegenauigkeit benachbarter Stackbauteile hinsichtlich ihrer Parallelität verbessert werden. Weiterhin kann durch das erfindungsgemäße Verfahren eine präzisere und schnellere Montage der Stackbauteile zum Brennstoffzellenstack erreicht werden. Dies wird erfindungsgemäß dadurch erreicht, dass das Verfahren einen ersten Schritt des Auflegens des flächigen Stackbauteils auf eine Auflage einer Spreizvorrichtung umfasst. Das Stackbauteil weist dabei eine Vielzahl von Öffnungen an einem Rand des Stackbauteils auf. Die Öffnungen sind beispielsweise Öffnungen, welche bei übereinandergestapelten Stackbauteilen einen Kühlkanal oder ein Kanal zum Zuführen und/oder Abführen von Elektrolyt bilden. In einem nächsten Schritt wird die Spreizvorrichtung aktiviert, wobei ein Positionieren von mehreren Spreizelementen der Spreizvorrichtung derart erfolgt, dass in mehreren Öffnungen des Stackbauteils mindestens ein Spreizelement angeordnet ist. In einem nächsten Schritt werden die Spreizelemente in den Öffnungen derart bewegt, dass das flächige Stackbauteil gespannt wird. Dadurch wird das Stackbauteil in einer Ebene ausgerichtet und kann ohne Auftreten von Welligkeit oder anderen Unebenheiten in einen Brennstoffzellenstack montiert werden. Dadurch ist eine Parallelität der flächigen Stackbauteile des Brennstoffzellenstacks deutlich verbessert, wodurch auch eine bessere Performance des Brennstoffzellenstacks erreichbar ist.

Weiter bevorzugt weist das Stackbauteil eine Längsachse auf, wobei die Spreizelemente der Spreizvorrichtung in einem Winkel a zur Längsachse bewegt werden. Vorzugsweise ist das Stackbauteil im Wesentlichen rechteckig. Die Spreizelemente werden weiter bevorzugt in einem Winkel von vorzugsweise 30 bis 60 Grad, insbesondere 45 Grad, zur Längsachse des Stackbauteils bewegt.

Weiter bevorzugt werden für eine möglichst gute Ausrichtung der Stackbauteile die Spreizelemente in unterschiedlichen Richtungen bewegt.

Die Spreizvorrichtung umfasst vorzugsweise wenigsten vier Spreizelemente, welche in vier unterschiedlichen Öffnungen des Stackbauteils angeordnet sind, vorzugsweise zwei an jeder Längsseite des Stackelements. Die vier Spreizelemente werden weiter bevorzugt in vier unterschiedlichen Richtungen, insbesondere von der Längsachse weg in jeweils einem Winkel von vorzugsweise 45 Grad zur Längsachse bewegt. Es sei angemerkt, dass es auch möglich ist, dass zwei Spreizelemente bewegt werden, die gemeinsam in einer Öffnung des Stackbauteils angeordnet sind.

Die Spreizelemente sind vorzugsweise als Zylinderstifte ausgebildet. Weiter bevorzugt weisen die Öffnungen am Rand des Stackbauteils abgerundete Ecken auf, welche den gleichen Radius wie die Zylinderstifte aufweisen.

Das Stackbauteil wird weiter bevorzugt nach dem Spreizvorgang durch die Spreizvorrichtung von einer Unterseite her angesaugt, um die ebene, gespannte Form beizubehalten. Vorzugsweise werden dann die Spreizelemente der Spreizvorrichtung entfernt.

Weiter bevorzugt wird für die weitere Handhabung das Stackbauteil zum Weitertransport von einer Oberseite her mittels eines Sauggreifers o.ä. angesaugt, um die ebene Ausrichtung des Stackbauteils beizubehalten. Die Ansaugung von der Unterseite her wird vorzugsweise erst dann beendet, wenn die Oberseite durch den Sauggreifer o.ä. vollständig angesaugt ist, um die ebene Ausrichtung des Stackbauteils, die durch die Spreizvorrichtung hergestellt wurde, beizubehalten.

Weiter bevorzugt wird das so von der Oberseite her angesaugte Stackbauteil direkt in einen Brennstoffzellenstack gestapelt. Dadurch bleibt die durch die Spreizvorrichtung erzeugte Ebenheit des Stackbauteils auch im gestapelten Stack erhalten.

Weiter bevorzugt werden die einzelnen Stackbauteile der Spreizvorrichtung in der zu stapelnden Reihenfolge zugeführt und gespreizt und ausgerichtet. Ferner betrifft die vorliegende Erfindung eine Vorrichtung zur Handhabung und Ausrichtung von Stackbauteilen eines Brennstoffzellenstacks vor einer Montage. Die Vorrichtung umfasst dabei eine Auflage, die insbesondere eine Auflageebene bereitstellt, auf welcher das Stackbauteil anordenbar ist. Ferner umfasst die Vorrichtung eine Spreizvorrichtung mit mehreren Spreizelementen, wobei die Spreizelemente eingerichtet sind, in Öffnungen, die am Rand des Stackbauteils ausgebildet sind, einzugreifen. Die Spreizelemente sind für einen Spreizvorgang des Stackbauteils beweglich angeordnet. Ferner ist ein Antrieb vorgesehen, um Spreizelemente zu bewegen.

Der Antrieb der Spreizvorrichtung bewegt die Spreizelemente vorzugsweise in unterschiedlichen Richtungen, um den Spreizvorgang des Stackbauteils auszuführen, so dass das Stackbauteil möglichst in einer Ebene ausgerichtet ist. Die Bewegung der Spreizelemente ist vorzugsweise eine Linearbewegung. Der Antrieb kann beispielsweise ein Linearantrieb sein.

Weiter bevorzugt weist die Spreizvorrichtung mehrere Spreizelemente auf, insbesondere genau zwei pro Öffnung, die eingerichtet sind, um in eine der Öffnungen am Rand des Stackbauteils einzugreifen. Somit sind mehrere Spreizelemente in einer Öffnung in einem Stackbauteil positioniert, wodurch der Spreizvorgang des Stackbauteils verbessert werden kann.

Die Spreizelemente, die eingerichtet sind, um gemeinsam in eine Öffnung des Stackbauteils einzugreifen, sind vorzugsweise in unterschiedlichen Richtungen bewegbar. Die in einer Öffnung angeordneten Spreizelemente liegen auf einer Geraden und sind weiter bevorzugt in einem Winkel a zu einer Längsachse des Stackbauteils angeordnet. Der Winkel a liegt vorzugsweise in einem Bereich von 30 bis 60 Grad und beträgt insbesondere 45 Grad.

Weiter bevorzugt ist die Auflage, auf welche die Stackbauteile aufgelegt werden, eine Fördereinheit, insbesondere ein Förderband.

Die Spreizelemente der Spreizvorrichtung sind vorzugsweise in die Öffnungen der Stackbauteile einfahrbar und ausfahrbar. Vorzugsweise werden die Spreizelemente von oben oder von unten in die Öffnungen der Stackbauteile eingefahren und nach dem Spreizvorgang und vorzugsweise einer Fixierung der gespreizten Stackbauteile in der Ebene wieder ausgefahren. Die Fixierung des gespreizten Stackbauteils wird vorzugsweise mittels Unterdruck, vorzugsweise unterhalb der Fördereinheit, realisiert.

Die Vorrichtung umfasst ferner auch einen Greifer, insbesondere einen Sauggreifer, um das ausgerichtete Stackbauteil von oben zu greifen, so dass die Ebenheit des ausgerichteten Stackbauteils beim weiteren Handling des Stackbauteils, insbesondere der Montage zum Brennstoffzellenstack, beibehalten wird.

Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische, perspektivische Ansicht einer Vorrichtung zur Handhabung von Stackbauteilen zur Durchführung des erfindungsgemäßen Verfahrens und
- Fig. 2: eine schematische Ansicht eines gespreizten Stackbauteils.

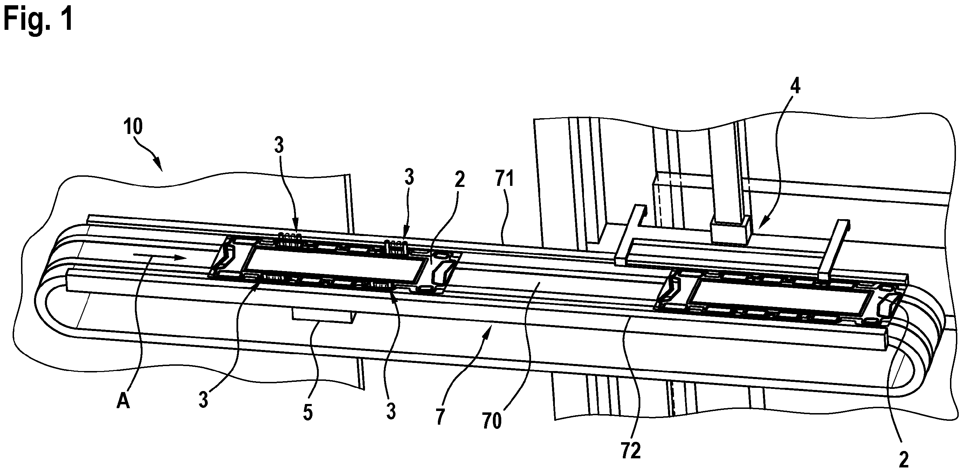

Figur 1 zeigt eine schematische Ansicht einer Vorrichtung 10 zur Handhabung und zum Ausrichten von flächigen Stackbauteilen 2 für einen Brennstoffzellenstack und das erfindungsgemäße Handhabungsverfahren.

Die Stackbauteile 2 sind flächige, plattenartige dünne Bauteile, welche in einer vorbestimmten Reihenfolge zu einem Brennstoffzellenstack gestapelt werden. Die Stackbauteile sind beispielsweise Bipolarplatten, Membranen oder Dichtungen.

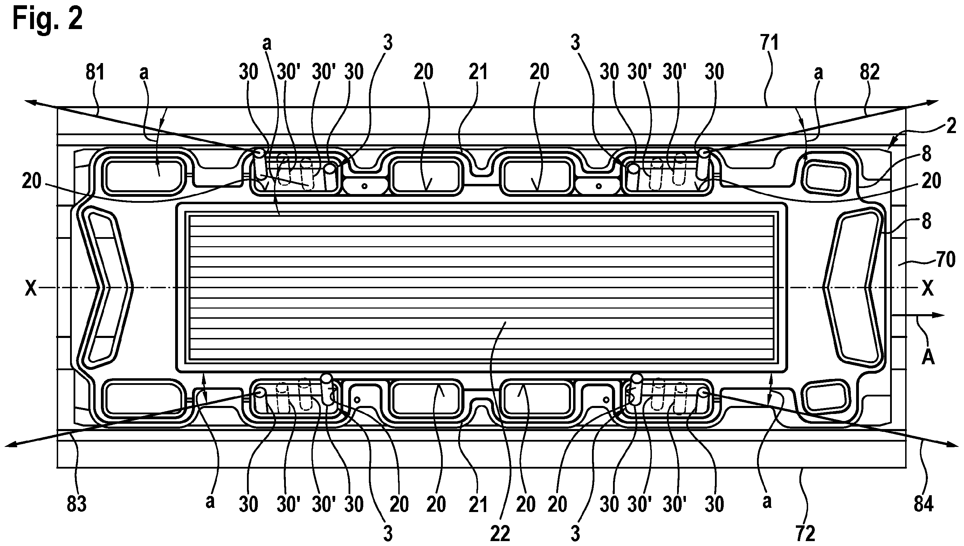

Wie aus Figur 2 ersichtlich ist, sind die Stackbauteile derart aufgebaut, dass an einem Rand 21 eine Vielzahl von Öffnungen 20 ausgebildet sind. Die Öffnungen 20 dienen im zusammengestapelten Brennstoffzellenstack beispielsweise als Kühlkanäle, welche durch die übereinandergestapelten Stackbauteile hergestellt werden, oder als Zufuhrkanäle und Abfuhrkanäle für das Elektrolyt.

Die Stackbauteile sind vorzugsweise Bauteile für einen Brennstoffzellenstack mit großer Leistung, insbesondere für Schwerlastfahrzeuge wie LKWs oder Busse oder Schiffe oder auch stationäre Anlagen. Die Leistung eines Brennstoffzellenstacks kann dabei bis zu 60 MW errreichen, so dass der Brennstoffzellenstack und insbesondere auch die flächigen Stackbauteile entsprechend große Abmessungen aufweisen. Beispielhaft können die Stackbauteile eine Länge von 654 mm und eine Breite von 224 mm aufweisen. Ein zusammengesetzter Brennstoffzellenstack kann dann je nach Leistung und Anzahl der Brennstoffzellen zwischen 210 kg bis 300 kg wiegen.

Dies macht deutlich, dass die Handhabung derartiger Bauteile, welche zum Teil auch hochempfindlich sind, schwierig ist. Insbesondere muss dabei eine Welligkeit beim Stapelvorgang zum Brennstoffzellenstack der einzelnen Bauteile vermieden werden, um eine ausreichende Performance des Brennstoffzellenstacks zu erreichen.

Beispielhaft ist in Figur 2 im Detail eine Membranelektrode als Stackbauteil 2 dargestellt. Die Membranelektrode umfasst dabei eine zentrale Membran 22 und einen umlaufenden Rand 21. Im umlaufenden Rand 21 sind eine Vielzahl von Öffnungen 20 ausgebildet. Hierbei sind die im Wesentlichen rechteckigen Öffnungen 20 als Kühlkanäle vorgesehen, welche im zusammengesetzten Brennstoffzellenstack mit einem Kühlmedium durchströmt werden können, um den Brennstoffzellenstack zu kühlen. An den beiden Stirnseiten sind jeweils ein Zufluss und ein Abfluss für den notwendigen Elektrolyt ausgebildet. Der Kühlkreislauf und der Elektrolytkreislauf sind dabei getrennt und beispielsweise durch aufgedruckte Dichtungen 8 voneinander getrennt.

Die Vorrichtung 10 zur Handhabung des Stackbauteils 2 umfasst dabei eine Auflage, welche in diesem Ausführungsbeispiel ein Förderband 70 einer Fördereinheit 7 ist. Das Förderband 70 stellt dabei eine Auflageebene bereit, auf welcher das Stackbauteil 2 relativ eben aufliegt. Trotzdem kann es vorkommen, dass geringe Welligkeiten oder ungenaue Ausrichtung des Stackbauteils auf dem Förderband 70 vorliegt. Der Pfeil A bezeichnet eine Transportrichtung des Förderbandes.

Die Vorrichtung 10 umfasst ferner eine Spreizvorrichtung 3 mit einer Vielzahl von Spreizelementen 30. Die Spreizelemente 30 sind in diesem Ausführungsbeispiel Zylinderstifte. Die Spreizelemente 30 sind, wie in Figur 2 gezeigt, in Öffnungen 20 im Rand 21 des Stackbauteils 2 angeordnet.

Wie im Detail aus Figur 2 ersichtlich ist, sind jeweils vier Spreizelemente 30 in insgesamt vier Öffnungen 20 angeordnet. Die Öffnungen 20 sind dabei derart ausgewählt, dass zwei Öffnungen 20 an einer ersten Längsseite und zwei Öffnungen 20 an einer zweiten Längsseite des Stackbauteils 2 vorgesehen sind. Die Öffnungen 20 sind dabei im Wesentlichen rechteckig ausgebildet und weisen abgerundete Ecken auf. Die abgerundeten Ecken entsprechen dabei dem Durchmesser der als Zylinderstifte ausgebildeten Spreizelemente 30. Zwei Spreizelemente 30 sind in den Öffnungen 20 auf einer Geraden angeordnet, wobei die Gerade zu einer Längsachse X-X des Stackbauteils 2 in einem Winkel a von circa 30 Grad angeordnet ist.

Die Spreizelemente 30 werden dabei in vier unterschiedliche Richtungen 81, 82, 83, 84 bewegt, wobei die jeweils äußeren Spreizelemente 30 nach außen bewegt werden und die jeweils inneren Spreizelemente 30 nach innen bewegt werden, jeweils im Winkel a zur Längsachse X-X. In Figur 2 sind schematisch in gestrichelter Weise die Spreizelemente 30' im ungespreizten Zustand eingezeichnet. Die Spreizelemente 30 können beispielsweise von oben in die Öffnungen 20 eingeführt werden.

Die Spreizelemente 30 können beispielsweise mittels Linearantrieben (nicht gezeigt) bewegt werden.

Die Vorrichtung 10 umfasst ferner eine Ansaugvorrichtung 5, welche unterhalb des Förderbandes 70 angeordnet ist. Die Ansaugvorrichtung 5 ist eingerichtet, das Stackbauteil 2, welches durch die Spreizvorrichtung 3 gespreizt und ausgerichtet wurde, anzusaugen, so dass sich die Position des Stackbauteils 2 vor der Montage nicht mehr ändert.

Wie weiter aus Figur 1 ersichtlich ist, weist die Vorrichtung 10 vorzugsweise ferner einen Sauggreifer 4 auf, welcher das ausgerichtete Stackbauteil 2 von oben ansaugt und dann direkt zum Stapelvorgang zur Herstellung des Brennstoffzellenstacks befördern kann. Sobald der Sauggreifer 4 das ausgerichtete Stackbauteil 2 fest angesaugt hat, kann die von unten vorgesehene Ansaugvorrichtung das Stackbauteil 2 freigeben.

Somit kann mittels der erfindungsgemäßen Vorrichtung und dem erfindungsgemäßen Verfahren eine Ausrichtung des Stackbauteils 2 in einer Ebene ausgeführt werden, wobei das erfindungsgemäße Verfahren insbesondere für eine Großserienfertigung geeignet ist und einen hohen Automatisierungsgrad aufweist. Das Auflegen des Stackbauteils 2 auf das Förderband 70 kann dabei ebenfalls automatisiert erfolgen. Durch die nachfolgende Ausrichtung mittels der Spreizvorrichtung 3 muss das Auflegen des Stackbauteils 2 auf das Förderband 70 nicht hundertprozentig exakt erfolgen, wodurch die Durchlaufzeit des Stackbauteils 2 bis zur endgültigen Montage reduziert werden kann.

Um eine gewisse Vorausrichtung zu ermöglichen, umfasst die Fördereinheit 7 zwei seitliche Führungsschienen 71, 72, welche eine Grobausrichtung bei dem Auflegen des Stackbauteils 2 auf das Förderband 70 vornehmen. Die seitlichen Führungsschienen 71, 72 stellen auch beim Weitertransport des ausgerichteten Stackbauteils 2 sicher, dass das Stackbauteil 2 in der ausgerichteten Ebene verbleibt.

Das Bezugszeichen 8 bezeichnet Dichtungen, welche auf dem Stackbauteil 2 aufgebracht sind. Die Dichtungen stellen im montierten Zustand eine Abdichtung des Stackbauteils 2 zu einem benachbarten Bauteil sicher.

Somit kann gemäß dem erfindungsgemäßen Verfahren ein Stackbauteil 2 auf eine Auflage aufgelegt werden, mittels der Spreizeinrichtung 3 in einer Ebene ausgerichtet werden, so dass das Stackbauteil 2 vollständig in der Ebene ohne Wellenbildung angeordnet ist und kann in der ebenen Position des Stackbauteils 2 an eine Greifvorrichtung übertragen werden, um dann in einem Brennstoffzellenstack gestapelt zu werden. Hierbei kann die ebene Ausrichtung des Stackbauteils 2 beibehalten werden. Durch die Automatisierung kann eine Durchlaufzeit zur Vorbereitung des Stackbauteils 2 für den Schritt des Stapelns im Brennstoffzellenstack deutlich reduziert werden.

Auch wird eine Qualität des Brennstoffzellenstacks verbessert, da alle Stackbauteile 2 in ebener Ausrichtung im Brennstoffzellenstack gestapelt werden können. Somit kann eine Großserienfertigung von Brennstoffzellenstacks verbessert werden und die Ausrichtung des Brennstoffzellenstacks von dem Vorgang des Stapelns entkoppelt werden, was auch beim Stapeln zu einer Zeitersparnis führt.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 2: flächiges Stackbauteil
- 3: Spreizvorrichtung
- 4: Sauggreifer
- 5: Ansaugvorrichtung
- 7: Fördereinheit
- 8: Dichtung
- 10: Vorrichtung zum Handhaben eines Stackbauteils
- 20: Öffnungen
- 21: Rand
- 22: Membran
- 30: Spreizelemente
- 70: Förderband
- 71: seitliche Führungsschiene
- 72: seitliche Führungsschiene
- 81-84: Spreizrichtungen
- a: Winkel
- A: Transportrichtung
- X-X: Längsachse des Stackbauteils

## Patentansprüche

1. Verfahren zur Handhabung eines flächigen Stackbauteils (2) eines Brennstoffzellenstacks vor einer Montage in den Bennstoffzellenstack, umfassend die Schritte:
- Auflegen des flächigen Stackbauteils (2) auf eine Auflage, wobei das Stackbauteil (2) eine Vielzahl von Öffnungen (20) an einem Rand (21) des Stackbauteils (2) aufweist,
- Aktivieren einer Spreizvorrichtung (3), wobei ein Positionieren von mehreren Spreizelementen (30) der Spreizvorrichtung (3) derart erfolgt, dass in mehreren Öffnungen (20) des Stackbauteils (2) mindestens ein Spreizelement (30) angeordnet ist, und
- Bewegen der Spreizelemente (30) in den Öffnungen (20) des Stackbauteils (2) derart, dass das Stackbauteil (2) gespannt wird, so dass das Stackbauteil (2) in einer Ebene ausgerichtet ist.

2. Verfahren nach Anspruch 1, wobei das Stackbauteil (2) eine Längsachse (X-X) aufweist, und die Spreizelemente (30) der Spreizvorrichtung (3) in einem Winkel (a) zur Längsachse (X-X) bewegt werden.

3. Verfahren nach einem der vorhergehenden Ansprüche, wobei die Spreizelemente (30) in unterschiedlichen Richtungen bewegt werden.

4. Verfahren nach Anspruch 3, wobei die Spreizvorrichtung (3) mindestens vier Spreizelemente (30) aufweist, wobei jedes der vier Spreizelemente (30) in einer unterschiedlichen Öffnung (20) des Stackbauteils (2) für den Spreizvorgang angeordnet wird, und insbesondere wobei jedes der Spreizelemente (30) in eine unterschiedliche Richtung bewegt wird.

5. Verfahren nach einem der vorhergehenden Ansprüche, wobei das Stackbauteil (2) nach dem Spreizen von einer Flachseite, insbesondere Unterseite, her angesaugt wird, um die gespreizte, ausgerichtete Form in der Ebene beizubehalten.

6. Verfahren nach Anspruch 5, wobei das Stackbauteil (2) zum Weitertransport von einer gegenüberliegenden Flachseite, insbesondere Oberseite, mittels eines Sauggreifers (4) angesaugt wird und abtransportiert wird, insbesondere direkt in einen Brennstoffzellenstack gestapelt wird.

7. Vorrichtung zur Handhabung und Ausrichtung eines flächigen Stackbauteils (2) eines Brennstoffzellenstacks vor einer Montage des Stackbauteils (2) in den Brennstoffzellenstack, umfassend
- eine Auflage, auf welcher das Stackbauteil (2) anordenbar ist,
- eine Spreizvorrichtung (3) mit mehreren Spreizelementen (30),
- wobei die Spreizelemente (30) eingerichtet sind, in Öffnungen (20), die im Stackbauteil (2) ausgebildet sind, einzugreifen,
- wobei die Spreizelemente (30) für einen Spreizvorgang des Stackbauteils (2) zur Ausrichtung in einer Ebene beweglich angeordnet sind, und
- einen Antrieb, um Spreizelemente (30) zu bewegen und den Spreizvorgang auszuführen.

8. Vorrichtung nach Anspruch 7, wobei die Spreizvorrichtung (3) eingerichtet ist, die Spreizelemente (30) in unterschiedlichen Richtungen zu bewegen.

9. Vorrichtung nach Anspruch 7 oder 8, wobei die Spreizelemente (30) eingerichtet sind, eine Linearbewegung auszuführen.

10. Vorrichtung nach einem der Ansprüche 7 bis 9, wobei die Spreizvorrichtung (3) eine Vielzahl von Spreizelementen (30) aufweist, wobei die Anzahl der Spreizelemente (30) derart gewählt ist, dass in einer Öffnung im Stackbauteil (2), in welcher Spreizelemente (30) angeordnet sind, jeweils mehrere Spreizelemente (30), insbesondere genau zwei Spreizelemente, angeordnet sind.

11. Vorrichtung nach Anspruch 10, wobei die Spreizelemente (30) in einer Öffnung (20) in unterschiedliche Richtungen bewegt werden.

12. Vorrichtung nach Anspruch 10 oder 11, wobei eine Gerade durch die Spreizelemente (30) in einem Winkel (a) zu einer Längsachse (X-X) des Stackbauteils (2) angeordnet ist.

13. Vorrichtung nach einem der Ansprüche 7 bis 12, wobei die Auflage ein Förderband (70) einer Fördereinheit (7) ist.

14. Vorrichtung nach einem der Ansprüche 7 bis 13, wobei die Spreizelemente (30) senkrecht zur Auflage bewegbar angeordnet sind, um in die Öffnungen (20) des Stackbauteils (2) einzufahren und herauszufahren.

15. Vorrichtung nach einem der Ansprüche 7 bis 14, ferner umfassend einen Sauggreifer (4), welcher eingerichtet ist, das ausgerichtete Stackbauteil (2) von der Auflage zur weiteren Montage in der ausgerichteten Form aufzunehmen.
